Europäisches Patentamt

European Patent Office

Office européen des brevets

(19)

(11) Numéro de publication: **0 145 559**
**B1**

(12) **FASCICULE DE BREVET EUROPEEN**

(45) Date de publication du fascicule du brevet: **25.04.90**

(51) Int. Cl.⁵: **H 01 M 6/36, H 01 M 6/50**

(21) Numéro de dépôt: **84402315.0**

(22) Date de dépôt: **14.11.84**

(54) Dispositif électrique comportant au moins une pile thermique et son application à un générateur d'énergie modulable.

(30) Priorité: **16.11.83 FR 8318206**

(43) Date de publication de la demande:
**19.06.85 Bulletin 85/25**

(45) Mention de la délivrance du brevet:
**25.04.90 Bulletin 90/17**

(84) Etats contractants désignés:
**AT BE CH DE GB IT LI NL SE**

(56) Documents cités:
**EP-A-0 013 005**
**DE-A-2 819 583**
**FR-A-1 088 450**
**GB-A-1 342 334**
**US-A-3 639 773**
**US-A-3 689 776**
**US-A-3 855 003**

(73) Titulaire: **AEROSPATIALE Société Nationale Industrielle**
**37, Boulevard de Montmorency**
**F-75016 Paris (FR)**

(72) Inventeur: **Pathe, Claude**
**97 rue Gay Lussac**
**F-92320 Chatillon (FR)**
Inventeur: **Darmois, Jean**
**45 rue du Panorama**
**F-92340 Bourg-La-Reine (FR)**
Inventeur: **Nee, Claude**
**94 rue du Colonel Fabien**
**F-92160 Antony (FR)**

(74) Mandataire: **Bonnetat, Christian et al**
**CABINET BONNETAT 23, Rue de Léningrad**
**F-75008 Paris (FR)**

EP 0 145 559 B1

Courier Press, Leamington Spa, England.

# Description

La présente invention concerne un dispositif électrique comportant au moins une pile thermique et son application à un générateur d'énergie électrique modulable.

On connaît déjà des piles thermiques, à usage unique et à fonctionnement de durée relativement courte, dans lesquelles l'électrolyte est normalement inerte et doit être activé par l'intermédiaire d'un activateur. Par exemple, cet électrolyte est constitué par un sel minéral fusible se présentant à l'état solide et électriquement inerte à la température ambiante, mais devenant électriquement actif dès qu'il a été fondu par l'activateur, qui est alors un inflammateur initié pyrotechniquement.

De telles piles thermiques présentent des particularités intéressantes, liées notamment au fait qu'avant leur activation l'électrolyte est électriquement neutre et solide:

—leur durée de vie, en stockage avant activation, est au moins égale à vingt ans, si ce n'est plus;

—elles ne nécessitent aucune maintenance et leur étanchéité est parfaite;

—elles résistent à des conditions sévères d'environnement et peuvent être activées à tout moment, dans pratiquement n'importe quelles conditions. Elles admettent des conditions de température ambiante comprise entre −50°C et +70°C;

—elles présentent une très grande impédance avant et après fonctionement.

De telles propriètés avantageuses destineraient lesdites piles thermiques tout particulièrement à l'alimentation des dispositifs électroniques de veille, de surveillance, d'alarme, de secours, etc..., d'autant plus que, même connectées à leur circuit d'utilisation, elles ne débitent pas spontanément, mais au contraire doivent être activées pour ce faire.

Cependant, une telle application a été jusqu'à présent impossible à cause du fonctionnement seulement temporaire desdites piles après leur activation.

La présente invention a pour objet de remédier à cet inconvénient et notamment de permettre la réalisation d'un générateur d'énergie électrique, composé de piles thermiques et susceptible de délivrer une énergie électrique modulable dans le temps. Grâce à l'invention, on peut alors s'affranchir des défauts des piles séches et accumulateurs, concernant principalement leur maintenance délicate, leur faible durée de vie, leur étanchéité aléatoire et leur peu de résistance à un environnement sévère.

L'idée de base de la présente invention repose sur la constatation que, pendant leur fonctionnement, ces piles thermiques sont le siège d'un dégagement de chaleur faisant subir a leurs éléments, notamment à leur boîtier, une augmentation continue de température telle qu'à une température desdits éléments correspond un instant déterminé du fonctionnement d'une telle pile, c'est-à-dire un état interne de celle-ci. Par exemple, la température du boîtier d'une telle pile thermique placée à la température ambiante croît linéairement de cette température ambiante, à l'instant d'activation, à une température maximale (généralement comprise entre 150 et 300°C) atteinte à l'expiration du fonctionnement.

Pour exploiter cette propriété, la présente invention prévoit un dispositif électrique comportant au moins deux piles thermiques, dans lesquelles l'électrolyte, normalement inerte, doit être activé par l'intermédiaire d'un activateur et dont le fonctionnement temporaire s'accompagne d'un dégagement de chaleur faisant subir aux éléments de ladite pile thermique une augmentation de température telle qu'à une température déterminée desdits éléments correspond in instant déterminé du fonctionnement de ladite pile, au moins un interrupteur sensible à la température étant agencé en liaison thermique avec un élément appartenant à une pile ou lié à celle-ci, et étant prévu pour réagir à une température prédéterminée, comprise dans la plage des températures prises par ledit élément au cours du fonctionnement de ladite pile, caractérisé en ce que ledit interrupteur est initialement dans un état non conducteur, à partir duquel il peut passer à un état conducteur sous l'action dudit dégagement de chaleur et en ce que ledit interrupteur associé à ladite pile est agencé dans le circuit de commande de l'activateur d'une autre pile thermique, de même type que la pile.

Ainsi, ledit interrupteur thermique peut commander un circuit électrique dès que le fonctionnement de ladite pile atteint un état prédéterminé.

De préférence, ledit interrupteur thermique est monté sur le boîtier de ladite pile et se trouve en liaison thermique avec celui-ci. Il es alors avantageux que ledit boîtier soit au moins en partie électriquement conducteur et fasse partie du circuit électrique de l'activateur de ladite autre pile thermique.

Dans un mode de réalisation particulier, l'interrupteur peut alors comporter un linguet conducteur, par exemple du type ressort, pressé en direction du boîtier de ladite pile, mais électriquement séparé de celui-ci par une matière isolante susceptible, soit d'être éliminée par fusion, soit de devenir conductrice, en réponse à l'augmentation de température de la portion de boîtier au contact de laquelle elle se trouve.

Bien entendu, pour éviter des défauts de fonctionnement au moment de l'activation de la pile, il est nécessaire de mettre en oeuvre des matières isolantes pour lesquelles la température de ramollissement ou de fusion ou de conduction, non seulement correspond à la température de la pile à laquelle on désire actionner le circuit électrique commandé, mais encore est supérieure à la température maximale de l'environnement dans lequel se trouve la pile, avant son activation.

A titre d'exemple, on indique ci-après des substances isolantes pouvant être utilisées, en fonction de la température qui leur est appliquée:

—jusqu'à 70°C   : paraffines, stéarines
—de 70°C à 100°C   : polyéthylène
—de 100°C à 160°C   : polyuréthane
—de 160°C à 210°C   : anthracènes
—de 210°C à 240°C   : polycarbonates
—240°C à 270°C   : polyoxyphénylènes.

Le choix de l'interrupteur, de l'élément de la pile auquel il est relié, de la liaison entre ledit élément et ledit interrupteur, de l'emplacement de l'interrupteur sur ledit élément, etc... peut être fait pour que l'actionnement dudit interrupteur se fasse dès l'activation de la pile, pendant le fonctionnement de celle-ci, ou bien encore après ce fonctionnement proprement dit.

Bien entendu, plusieurs interrupteurs peuvent être associés à ladite pile en vue de la commande de plusieurs circuits électriques et/ou de la délivrance de signaux à différents instants du fonctionnement de ladite pile.

Le ou les interrupteurs thermiques commandés par l'échauffement de ladite pile peuvent eux-mêmes être disposés dans le circuit de commande de l'activateur d'une autre pile thermique. Ainsi, au choix, ces deux piles thermiques peuvent fonctionner simultanément, avec recouvrement partiel ou total de fonctionnement, ou bien successivement.

De façon plus générale, pour obtenir un générateur continu selon l'invention , on prévoit une pluralité de piles thermiques du type décrit ci-dessus, dont chacune d'elles est associée à au moins un interrupteur pour pouvoir commander au moins une autre desdites piles.

Du fait que, avant et après fonctionnement, de telles piles présentent une impédance très élevée et ne débitent aucun courant, les piles de ladite pluralité peuvent être montées en parallèle les unes sur les autres sur un même dispositif d'utilisation sans l'intermédiaire d'interrupteur. On obtient ainsi un générateur constitué d'une cascade de piles thermiques qui sont disposées en parallèle sur un appareil à alimenter et dont l'activateur de chacune d'elles est commandé par l'interrupteur associé à la pile thermique précédente dans la cascade, sauf pour la première qui est commandée directement et volontairement par un opérateur.

On remarquera que le brevet DE—A—2 819 583 décrit un conducteur électriquement séparé par une matière isolante fusible. Cependant, dans ce brevet, le but à atteindre est l'interruption du fonctionnement de la pile dans le cas où la température devient trop élevée.

Par ailleurs, le brevet US—A—3 639 773 décrit une cascade de piles agencées successivement comme dans la présente demande, mais commandées en fonction d'une capacitance et non pas selon la température de la pile précédente.

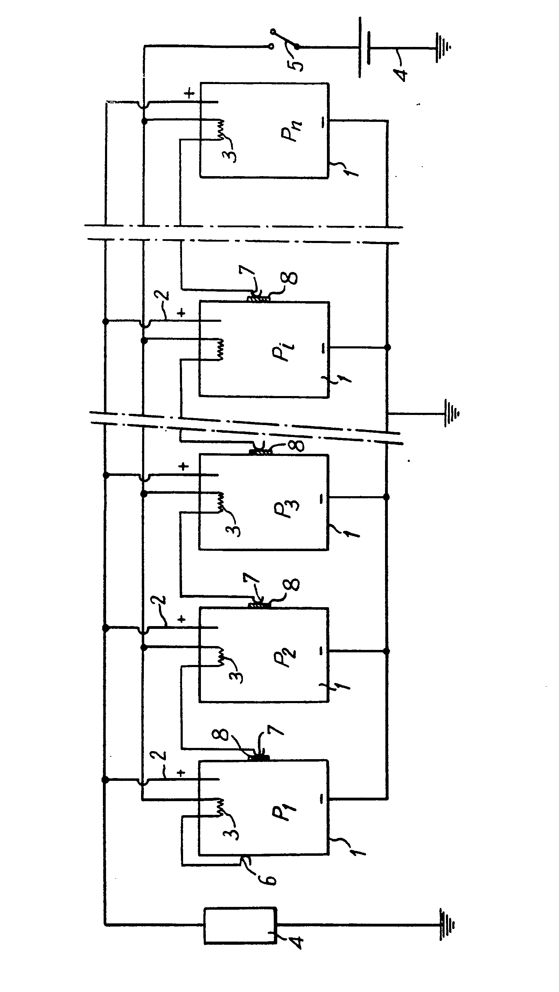

La figure unique du dessin annexé fera bien comprendre comment l'invention peut être réalisée.

Sur cette figure, on a représenté un exemple de réalisation d'un générateur à piles multiples selon l'invention.

Le générateur selon l'invention, montré par la figure, comporte une pluralité de piles thermiques $P_1$, $P_2$,...$P_i$,...$P_n$ du type décrit ci-dessus. Chacune de ces piles comporte un boîtier 1, réalisé en une matière conductrice et reliée à la cathode, une anode 2 et un inflammateur (ou activateur) 3.

Dans l'exemple représenté:
—tous les boîtiers 1 sont reliés à la masse;
—toutes les anodes 2 sont reliées à la borne correspondante d'un appareil utilisateur 4, dont la borne opposée est reliée à la masse;
—tous les inflammateurs 3 sont reliés, d'un côté, à un dispositif de commande, constitué d'une pile 4 et d'un interrupteur 5, ou bien d'un système piezoélectrique;
—le côté opposé de l'inflammateur 3 de la pile $P_1$ est relié au boîtier 1 de ladite pile $P_1$, par un contact 6; et
—le côté opposé de l'inflammateur 3 des piles $P_2$, $P_3$,...$P_i$,...$P_n$ est relié à un contact 7, ces contacts 7 étant respectivement pressées contre le boîtier 1 des piles $P_1$, $P_2$,...$P_{i-1}$,...$P_{n-1}$, avec interposition d'une couche de matière électriquement isolante 8.

Dès que l'on ferme l'interrupteur 5, l'inflammateur 3 de la pile $P_1$ est alimenté par l'intermédiaire du contact 6 et du boîtier 1 de ladite pile. En consèquence, la pile $P_1$ est activée et commence à délivrer son énergie à l'appareil utilisateur 4.

En fonction de la nature des piles $P_i$, de la matière isolante 8 et de l'appareil utilisateur 4, la suite du fonctionnement du dispositif de la figure unique peut être différente.

Dans le cas où l'appareil 4 doit être alimenté sous une puissance équivalente à celle de chacune des piles élémentaires $P_i$ pendant un temps multiple du temps de fonctionnement d'une de celles-ci, la matière 8 et l'emplacement sur les boîtiers 1 des interrupteurs 7, 8 sont à chaque fois choisis pour que l'interrupteur 7, 8 d'une pile $P_{i-1}$ fonctionne juste avant le moment où cette pile $P_{i-1}$, activée, va finir de délivrer son énergie à l'appareil 4, de sorte que l'inflammateur 3 de la pile suivante $P_i$ est actionné à ce moment à travers l'interrupteur 7, 8 et le boîtier 1 de la pile précédente $P_{i-1}$.

Si l'appareil 4 requiert une puissance $n$ fois multiple de celle d'une pile élémentaire $P_i$, les interrupteurs 7, 8 et leur agencement sont prévus pour que les $n$ piles $P_i$ soient activées simultanément, c'est-à-dire pour que tous les interrupteurs 7, 8 atteignent immédiatement leur température de fonctionnement et transmettent l'ordre d'activation de la pile $P_2$ vers le pile $P_n$.

Dans un autre type de fonctionnement, l'appareil utilisateur 4 peur requérir des périodes de fonctionnement entre lesquelles peut s'écouler des durées variant de la seconde à la dizaine d'année, chaque période de fonctionement étant délimitée par la fermeture, puis l'ouverture de l'interrupteur 5. A l'intérieur de chacune desdites périodes de fonctionnement, on peut, de la façon décrite ci-dessus, mettre en action une ou plusieurs piles $P_i$, successivement ou simultanément.

On comprendra aisément que d'autres modes de fonctionnement que ceux décrits ci-dessus peuvent être obtenus par adaptation et agencement des interrupteurs 7, 8 et/ou commande de l'interrupteur 5.

On remarquera que l'énergie nécessaire à la commande des inflammateurs 3 est très faible, de sorte que la pile 4 qui la fournie (ou tout autre dispositif, tel qu'un système piézoélectrique) peut être très éloignée de l'ensemble des piles $P_i$.

Bein entendu, une ou plusieurs piles $P_i$ peuvent être pourvues de plusieurs interrupteurs 7, 8 pour commander d'autres chaînes de commande et d'utilisation.

Quoique l'on ait décrit une commande purement électrique pour les inflammateurs 3, il va de soi que l'on pourrait utiliser, à partir d'un contact 7, 8 d'autres types de commande, par exemple électro-mécanique, électro-optique ou détonique.

## Revendications

1. Dispositif électrique comportant au moins deux piles thermiques ($P_i$), dans lesquelles l'électrolyte, normalement inerte, doit être activé par l'intermédiaire d'un activateur (3) et dont le fonctionnement temporaire s'accompagne d'un dégagement de chaleur faisant subir aux éléments de ladite pile thermique une augmentation de température telle qu'à une température déterminée desdits éléments correspond un instant déterminé du fonctionnement de ladite pile, au moins un interrupteur (7, 8) sensible à la température étant agencé en liaison thermique avec un élément (1) appartenant à une pile ($P_i$) ou lié à celle-ci, et étant prévu pour réagir à une température prédéterminée, comprise dans la plage des températures prises par ledit élément (1) au cours du fonctionnement de ladite pile ($P_i$), caractérisé en ce que ledit interrupteur (7, 8) est initialement dans un état non conducteur, à partir duquel il peut passer à un état conducteur sous l'action dudit dégagement de chaleur et en ce que ledit interrupteur (7, 8) associé à ladite pile ($P_i$) est agencé dans le circuit de commande de l'activateur (3) d'une autre pile thermique ($P_{i+1}$), de même que la pile ($P_i$).

2. Dispositif électrique selon la revendication 1, caractérisé en ce que ledit interrupteur (7, 8) est monté sur le boîtier (1) de ladite pile ($P_i$) et se trouve en liaison thermique avec celui-ci.

3. Dispositif électrique selon la revendication 2, caractérisé en ce que ledit boîtier (1) de la pile ($P_i$) est au moins en partie électriquement conducteur et fait partie dudit circuit électrique de l'activateur (3) de ladite autre pile thermique ($P_{i+1}$).

4. Dispositif électrique selon la revendication 3, caractérisé en ce que ledit interrupteur (7, 8) comporte un linguet conducteur (7) pressé en direction dudit boîtier (1) de ladite pile ($P_i$), mais électriquement séparé de celui-ci par une matière isolante (8), susceptible, soit d'être éliminée par fusion, soit de devenir conductrice, en réponse à l'augmentation de température de la portion du boîtier au contact de laquelle elles se trouve.

5. Dispositif électrique selon la revendication 4, caractérisé en ce que, en fonction de la température de réponse désirée pour ledit interrupteur (7, 8), ladite matière isolante (8) est la suivante:

—jusqu'à 70°C : paraffines, stéarines
—de 70°C à 100°C : polyéthylène
—de 100°C à 160°C : polyuréthane
—de 160°C à 210°C : anthracènes
—de 210°C à 240°C : polycarbonates
—de 240°C à 270°C : polyoxyphénylènes.

6. Dispositif électrique selon la revendication 1, caractérisé en ce qu'il comporte une pluralité de piles thermiques ($P_i$) de même type, dont chacune d'elles est associée à au moins un tel interrupteur (7, 8) pour pouvoir commander au moins une autre desdites piles.

7. Dispositif selon la revendication 6, destiné à servir de générateur de courant continu pour l'alimentation d'un appareil utilisateur (4), caractérisé en ce que lesdites piles ($P_i$) sont montées en parallèle.

8. Dispositif électrique selon la revendication 7, caractérisé en ce qu'il comporte une cascade de piles agencées de façon que l'activateur (3) de chacune d'elles ($P_i$) soit commandé par l'interrupteur (7, 8) associé à la pile thermique ($P_{i-1}$) précédente dans la cascade, l'activateur (3) de la première pile thermique $P_1$ de ladite cascade étant volontairement commandable par un opérateur.

## Patentansprüche

1. Elektrische Vorrichtung, die mindestens zwei thermische Zellen ($P_i$) aufweist, in welchen der normalerweise inerte Elektrolyt mittels eines Aktivators (3) aktiviert werden muß und deren zeitweise Funktion von einer Wärmefreigabe begleitet ist, welche auf die Elemente der genannten thermischen Zelle einen solchen Temperaturanstieg ausübt, daß einer bestimmten Temperatur der genannten Elemente ein bestimmter Zeitpunkt der Funktion der genannten Zelle entspricht, wobei mindestens ein temperaturempfindlicher Interruptor (7, 8), der in thermischer Verbindung mit einem Element (1), das zu einer Zelle ($P_i$) gehört oder mit dieser verbunden ist, angeordnet ist und welcher dafür vorgesehen ist, um bei einer vorherbestimmten Temperatur innerhalb des Bereiches der Temperaturen, die durch das genannte Element (1) im Lauf der Funktion der genannten Zelle ($P_i$) angenommen werden, zu reagieren, dadurch gekennzeichnet, daß sich der genannte Interruptor (7, 8) anfänglich in einem nicht leitenden Zustand befindet, von welchem er unter der Wirkung der genannten Wärmefreigabe in den leitenden Zustand übergehen kann und daß der genannte mit der genannten Zelle ($P_i$) verbundene Interruptor (7, 8) im Steuerschaltkreis des Aktivators (3) einer anderen thermischen Zelle ($P_{i+1}$) vom selben Typ wie die Zelle ($P_i$) angeordnet ist.

2. Elektrische Vorrichtung nach Anspruch 1, dadurch gekennzeichnet, daß der genannte Interruptor (7, 8) am Gehäuse (1) der genannten Zelle

(P$_i$) angeordnet ist und sich mit diesem in thermischer Verbindung befindet.

3. Elektrische Vorrichtung nach Anspruch 2, dadurch gekennzeichnet, daß das genannte Gehäuse (1) der Zelle (P$_i$) zumindest zum Teil elektrisch leitend ist und einen Teil des genannten elektrischen Schaltkreises des Aktivators (3) der genannten anderen thermischen Zelle (P$_{i+1}$) bildet.

4. Elektrische Vorrichtung nach Anspruch 3, dadurch gekennzeichnet, daß der genannte Interruptor (7, 8) einen leitenden, beweglichen Kontakt (7) aufweist, welcher in Richtung des genannten Gehäuses (1) der genannten Zelle (P$_i$) gedrückt ist, aber von diesem durch ein isolierendes Material (8) elektrisch getrennt ist, welches entweder durch Schmelzen beseitigt werden kann oder aufgrund des Temperaturanstieges desjenigen Gehäuseteiles, mit welchem es sich in Kontakt befindet, leitend wird.

5. Elektrische Vorrichtung nach Anspruch 4, dadurch gekennzeichnet, daß in Abhängigkeit von der für den genannten Interruptor (7, 8) gewünschten Reaktionstemperatur das genannte isolierende Material (8) folgendes ist:

| | |
|---|---|
| —bis zu 70°C | : Paraffine, Stearine, |
| —von 70°C bis 100°C | : Polyäthylen, |
| —von 100°C bis 160°C | : Polyurethan |
| —von 160°C bis 210°C | : Anthrazene |
| —von 210°C bis 240°C | : Polycarbonate |
| —von 240°C bis 270°C | : Polyoxyphenylene. |

6. Elektrische Vorrichtung nach Anspruch 1, dadurch gekennzeichnet, daß sie eine Vielzahl von thermischen Zellen (P$_i$) von gleicher Art aufweist, deren jede mit mindestens einem solchen Interruptor (7, 8) verbunden ist, um mindestens eine andere der genannten Zellen steuern zu können.

7. Vorrichtung nach Anspruch 6, die dazu bestimmt ist, als Gleichstromgenerator zur Speisung eines Verbrauchergerätes (4) zu dienen, dadurch gekennzeichnet, daß die genannten Zellen (P$_i$) parallel angeordnet sind.

8. Elektrische Vorrichtung nach Anspruch 7, dadurch gekennzeichnet, daß sie eine Kaskade von Zellen aufweist, welche derart angeordnet sind, daß der Aktivator (3) einer jeden von ihnen (P$_i$) durch den Interruptor (7, 8), der mit der in der Kaskade vorhergehenden thermischen Zelle (P$_{i-1}$) verbunden ist, gesteuert wird, wobei der Aktivator (3) der ersten thermischen Zelle (P$_1$) der genannten Kadkade willkürlich durch einen Bedienungsmann steuerbar ist.

## Claims

1. Electrical device comprising at least two thermal batteries (Pi) in which the electrolyte, which is normally inactivated, has to be activated by means of an activator (3), and of which the temporary operation is coupled with release of heat which subjects the elements of said thermal battery to an increase of temperature such that to a specific temperature of said elements corresponds a predetermined working moment of said battery, at least one temperature sensitive switch (7, 8) being thermally connected with an element (1) belonging to a battery (Pi) or connected thereto, and being adapted to react to a predetermined temperature comprised within the range of temperatures taken on by said element (1) during the operation of said battery (Pi), characterized in that said switch (7, 8) is at first in a non-conductive state, from which it can change into a conductive state under the action of said release of heat, and in that said switch (7, 8) associated with said battery (Pi) is disposed in the control circuit of the activator (3) of another thermal battery (Pi+1) of the same type as the battery (Pi).

2. Electrical device as claimed in claim 1, characterized in that said switch (7, 8) is mounted on the casing (1) of said battery (Pi) and is thermally connected therewith.

3. Electrical device as claimed in claim 2, characterized in that said casing (1) of the battery (Pi) is at least partly electrically conductive and forms part of the electrical circuit of the activator (3) of said other thermal battery (Pi+1).

4. Electrical device as claimed in claim 3, characterized in that said switch (7, 8) comprises a conductive arm (7) which is pressed in towards said casing (1) of said battery (Pi) but electrically separated therefrom by an insulating material (8), which can, either be eliminated by melting, or become conductive, in response to an increase in the temperature of the portion of casing with which it is in contact.

5. Electrical device as claimed in claim 4, characterized in that, depending on the response temperature required for the switch (7, 8), said insulating material (8) is as follows:

| | |
|---|---|
| —up to 70°C | : paraffins, stearins |
| —between 70°C and 100°C | : polyethylene |
| —between 100°C and 160°C | : polyurethane |
| —between 160°C and 210°C | : anthracenes |
| —between 210°C and 240°C | : polycarbonates |
| —between 240°C and 270°C | : polyoxyphenylenes. |

6. Electrical device as claimed in claim 1, characterized in that it comprises a plurality of thermal batteries (Pi) of the same type, each battery being associated to at least one such switch (7, 8) in order to control at least another of said batteries.

7. Electrical device as claimed in claim 6, designed to be used as a D.C. generator for the supply of a utilization apparatus (4), characterized in that said batteries (Pi) are mounted in parallel.

8. Electrical device as claimed in claim 7, characterized in that it comprises a series of batteries arranged so that the activator (3) of each one (Pi) is controlled by the switch (7, 8) associated to the thermal battery (Pi—1) of the series which is immediately preceding, the activator (3) of the first thermal battery (P1) in the series being controlled at will by an operator.

1